# EUROPEAN PATENT SPECIFICATION

(11) **EP 1 513 657 B1**
(45) Date of publication and mention of the grant of the patent: **13.10.2010**
(21) Application number: 03760184.6
(22) Date of filing: 12.06.2003
(51) Int. Cl.: B25J 9/10, B25J 17/02, B25J 18/00

(54) **AN INDUSTRIAL ROBOT AND A METHOD FOR MANIPULATION IN AN INDUSTRIAL ROBOT COMPRISING A PARALLEL KINEMATIC MANIPULATOR**
INDUSTRIEROBOTER UND MANIPULATIONSVERFAHREN IN EINEM INDUSTRIEROBOTER MIT EINEM MANIPULATOR MIT PARALLELER KINEMATIK
ROBOT INDUSTRIEL ET PROCEDE DE MANIPULATION POUR ROBOT INDUSTRIEL COMPRENANT UN MANIPULATEUR CINEMATIQUE PARALLELE

(30) Priority: 14.06.2002 SE 0201848
(43) Date of publication of application: 16.03.2005
(73) Proprietor: ABB AB, 721 83 Västerås (SE)
(72) Inventor: BROGARDH, Torgny, S-724 79 Västeras (SE); KOCK, Sönke, 64319 Pfungstadt (DE)
(86) International application number: PCT/SE2003/000990
(87) International publication number: WO 2003/106115

(56) References cited:
- WO-A1-02/22320
- WO-A1-02/34480
- WO-A1-02/058895
- WO-A2-02/34461

## Description

### TECHNICAL FIELD

The present invention relates to an industrial robot, including a manipulator and a control unit having means for automatically operating the manipulator. The manipulator comprises a parallel kinematic manipulator including at least three arms, each comprising a link arrangement. The link arrangements together carry, directly or indirectly, a working platform member arranged to execute the function aimed at.

More specifically, the present invention relates to a robot and a method for manipulation according to the preamble of claims 1 and 21 respectively.

Such a robot and a method are known eg from WO-A-9 733 726.

The determination "parallel kinematic manipulator", PKM, is defined as a manipulator comprising a first stationary element, a second movable element (platform) and at least three arms. Each arm comprises a supporting first arm part and a second arm part, the latter consisting of a link arrangement connected to the movable platform. Each first arm part is actuated by a driving means preferably arranged on the stationary element to reduce the moving mass. These link arrangements transfer forces due to actuation of the supporting first arm parts when manipulating the movable platform.

### BACKGROUND OF THE INVENTION

The well-known robot type named SCARA robot is a serial kinematic manipulator primarily used for moving and rotating objects without changing the inclination of the objects. The manipulator comprises kinematic links coupled in series. These robots normally have four degrees of freedom in the x-, y-, z- directions and ϕ_{z} (rotation of the object about an axis parallel to the z-axis). For manipulating the object in the xy-plane, two arms coupled in series and working in the xy-plane are used. In order to achieve a movement in the z-direction a linear movement device is used. This device is arranged either after the arms coupled in series or before the arms coupled in series. In the first case the arms coupled in series must move the drive assembly for the z-movement and in the latter case the drive assembly for the z-movement must move the arms coupled in series. The drive assembly for the ϕ_{z}-movement will always be located at the extreme end of the kinematic chain of the robot.

Several of the properties concerning the SCARA-robot are improved with a robot, which manipulates an object with arms working in parallel, i.e. a parallel kinematic manipulator, PKM. According to the statements above, a serial kinematic robot comprises a large mass and thus becomes compliant with low mechanical natural frequencies, the accuracy is limited and large motor torques are required for accomplishing high acceleration, jerk and speed movements possible.

A parallel kinematic robot is a design offering a high degree of load capacity, high precision, high stiffness, high natural frequencies and low weight. Three arms working in parallel are required to obtain manipulation of a platform in three degrees of freedom, i.e. the x, y and z-directions in a Cartesian system of coordinates. Six arms working in parallel are required to obtain manipulation of a platform in all six degrees of freedom, i.e. the x, y, z directions and the rotation angle /inclination of an object arranged on the platform.

Ideally, an object ought to be manipulated by a total of six separate links, which transfer only compressive and tensile forces to the manipulated object to obtain a stiff and accurate manipulation. Generally, the PKM comprises three up to six first arm parts. As an example, a manipulator with four arms designed for four degrees of freedom has second arm parts sharing the six separate links. This is only possible with certain combinations of the links, as for example, 2/2/1/1 or 3/1/1/1. 2/2/1/1 means that two supporting first arm parts are connected to the respective second arm part, which comprises two links and another two supporting first arm parts are connected to the respective second arm part, which comprises a single link.

A known manipulator is manipulating a platform, which remains with unchanged inclination in the whole working area. The robot has three supporting first arm parts, each connected to a second arm part, in kinematic parallelism. From this robot, it is known to arrange a total of six links optionally distributed on three first arm parts according to the combinations 2/2/2 or 3/2/1.

A known device for relative movement of a first element in relation to a second element according to the combination 2/2/2 is disclosed in the international application WO 99/58301. The three arms, each comprises a supporting first arm part connected to a second arm part, which includes a link arrangement. The first element is described as stationary and the second element is manipulated in the x-, y- and z-direction by driving means. Each link arrangement is connected to a supporting first arm part and to the second element, respectively, by means of joints of 2 or 3 degrees of freedom. Each driving means comprises a stationary portion and a rotating portion, where the stationary portion is included in the first, stationary element. A first driving means is pivoting the first arm part and the second driving means is pivoting a first arm part about the same geometrical axis. The third driving means is pivoting a first arm part about a geometrical axis, which is non-parallel to the pivoting axis. The third driving means implies that upon pivoting of the supporting arm part by means of the driving means also the supporting arm part will accompany as a consequence of the fact that an axis and also a gear wheel will accompany the pivoting movement. Thus, the second and third driving means must accelerate more and are more heavily loaded compared with the first driving means. Consequently, this manipulator design necessitates three different driving means designs with three different drive dimensions. This makes the design more complicated and the manipulator relatively expensive to process. Another consequence is that the first driving means carries the highest moment of inertia and there will be an uneven distribution of the moment of inertia in the manipulator. Moreover, the mechanical natural frequencies will be lower because of the extra mass that the axis has to rotate, which gives a less accurate control at higher motion frequencies.

A device for relative movement of a first and a second element according to the second combination 3/2/1 is disclosed in the international application WO 97/33726. The device comprises a manipulator including three arms each arranged to connect a stationary and a movable platform. Each arm comprises a supporting first arm part and a second arm part connected to each other, where respective second arm part comprises a link arrangement Three actuators are fixed to the stationary platform and actuate one first arm part each. A first supporting arm part is connected to a second arm part linkage arrangement comprising three links in parallel. Another first arm part is connected to a double link arrangement and still another first arm part is connected to a single link, where all links are connected to the movable platform.

The document US 5,539,291 shows a parallel kinematic manipulator. A stand sustains a biaxial controllable supporting arm part. This arm part supports, in its turn, a second arm part, which sustains a movable object. A first and a third supporting arm pivoting around a common pivot axle are connected to the movable object via outer arms comprising belts with the function of a combination between an arm part and a four linkage. The outer arms and the second supporting arm are arranged to transmit compressive and tensile forces as well as torsion moments. The result is a relatively bulky design of a manipulator with a limited operating volume. Moreover, the shown manipulator comprises less stiffness, lower accuracy and much lower mechanical natural frequencies when compared with a manipulator comprising arm parts transmitting only compressive and tensile forces.

From EP 1 084 802 is previously known an industrial robot of the so called delta type, having four arms suspended from four different points on a base, and with individual actuators fixed to the base, four parallel linkages each of which is coupled at its upper end to an extremity of an arm of each of the actuators through a kinematic element, and a travelling plate whose four corners are coupled to lower ends of the parallel linkages. By controlling the actuators, a main member of the travelling plate is displaced with four degrees of freedom. The travelling plate may be designed to also comprise a pair of coupling members whose intermediate portion are relatively rotatably coupled at opposite ends of the main member, and a pair of pivots which connect the intermediate portion of the coupling member to the opposite ends of the main member, such that the main member can rotate relative to each coupling members around a vertical axis. In H4: a new family of 4-dof parallel robots", IEEE1999, is disclosed the principles of an industrial robot of the delta type with a similar travelling plate.

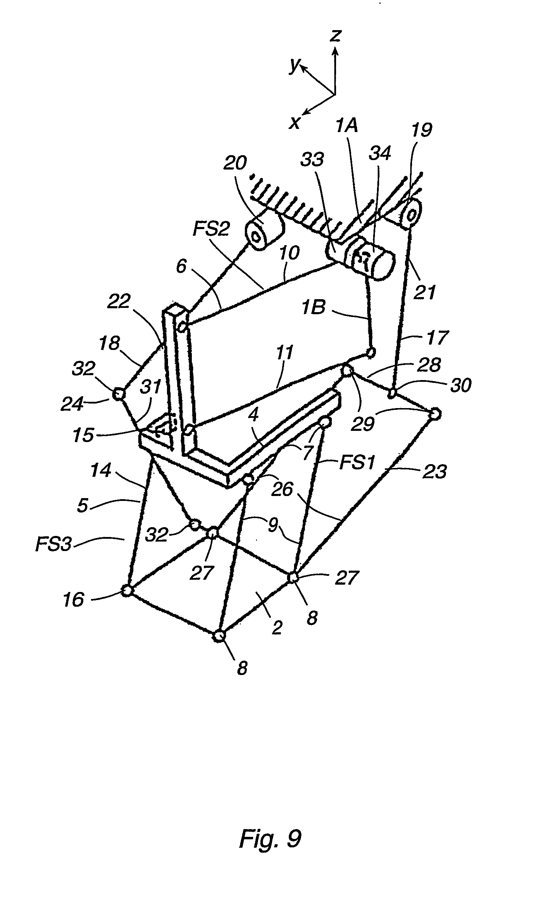

A robot is operating within a volume needed for the application, which is referred to as the operating volume in the following. Furthermore, the volume outside the operating volume, which a manipulator needs for its own purpose, is referred to as the unused operating volume. Prior art includes a manipulator, which has a voluminous and expensive design with a limited operating volume (Figure 9). For certain robot applications, it is important due to enormously high initial costs to make a PKM with a small unused operating volume in relation to the operating volume and which can work close to each other.

According to the conditions mentioned above, there is a need for an industrial robot with high accuracy and stiffness. Further, there is a need for a robot with an improved course of dynamic forces and simultaneously an increased working volume in relation to the unused manipulator volume. Further, there is a need for a robot, which has the characters of rapidness and an exact movement. Additionally, there is a need for a robot design which makes the robots work close to each other.

The known industrial robots comprising a parallel kinematic manipulator do not satisfy these needs.

### SUMMARY OF THE INVENTION

The object of the invention is to provide a rapid PKM, defined above, that offers high accuracy, stiffness and an increased ratio of operating/unused operating volume and that at the same time offers high functionality. A second object of the invention is to provide a method for a fast and accurate manipulation of an object in order to obtain a desirable function. A third object of the invention is to use a robot according to the first aspect and a method according to the second aspect for high accuracy operations and in clean rooms.

These objects are achieved according to the invention in a first aspect by an industrial robot comprising the features of the independent claim 1, in a second aspect by a method in an industrial robot for manipulating an object with high accuracy and high functionality comprising the features of the independent claim 21, and a use according to claim 29 and 30, respective. Preferred embodiments are described in the dependent claims.

The solution according to the first aspect of the invention is to provide an industrial robot including a manipulator for movement of an object in space. The manipulator includes a stationary platform, a movable platform for currying the object and at least three arms connecting the platforms. Each of the at least three arms are connected to the stationary platform for movement in 1DOF, one degree of freedom, by an individual driving unit- The movable platform is arranged to comprise at least two platform parts, which are jointed in one or several joints and arranged for relative movement. The purpose is to increase the functionality of the robot through wrangling the movable platform in comprising least two platform-parts. A first platform part is arranged for relative movement to an at least second platform part with the purpose of obtaining an operable movable platform.

According to the invention, the movable platform is operable either direct through the platform parts or is operable through a second platform part arranged on the movable platform. According to one embodiment of the invention, the second platform part comprises a robot tool. In another embodiment it comprises a load-engaging element.

In one embodiment of the invention, the robot comprises a parallel kinematic manipulator, PKM, which comprises three arms where each arm comprises a supporting first arm parts connected to a second arm part. The second arm parts together comprise at least 7 links with only axial forces and are arranged, as described above, to connect the platforms, optimizing the overall accuracy and stiffness of the manipulator.

The at least three first arm parts of a PKM according to the invention are arranged with the possibility of endless rotation about one or several axes. Thus, the endless rotation of the PKM reduces the unused operating volume to one or several different cylindrical volumes around respective axis of rotation and the unused operating volume is decreased. Another consequence of this design is that the minimum and maximum radial operating distance between the movable platform and respective axis of rotation is increased and consequently, the operating volume is increased. A reduced unused operating volume and an increased operating volume results according to the invention in an increased operating/unused operating volume ratio.

The possibility for a supporting first arm part to rotate more than 360° is referred to as endless rotation.

The robot according to the invention has a desirable dynamic character due to even dynamic force distribution and to lack of undesirable torsion and bending forces in the design. This results in high speed, acceleration and accuracy of the robot. The industrial robot according to the invention offers a possibility to transmit the relative movement of the joint-platform parts into movement of a secondary platform arranged on the movable platform. In a PKM according to the invention comprising a two parts joint-platform, a secondary platform radial oriented in relation to the stationary platform/the column, is implemented. The relative movement between the dual platform parts is utilized to create tilting and rotational movement of the secondary platform.

In one embodiment of the invention, the supporting first arm parts are arranged to rotate around one axis. Each first arm part is arranged connected to the stationary platform for movement in 1 DOF and is actuated by a separate actuating means for rotational or linear movement.
Furthermore, the actuating means is arranged to actuate only one single supporting arm part and is not actuating any part of the stationary platform or any other actuator. Therefore, the design of the robot according to the invention has a decreased moving mass compared to prior art robots. It is possible to have low effect as well as low mass of the actuators actuating the arms. This minimizes the moment of inertia and maximizes the acceleration and speed capability of the robot at an available torque level. This design is free from sources of undesirable play. The result according to the invention is a robot design with high mechanical natural frequencies and low transmission errors and therefore possessing a minimum moment of inertia and even distribution of the same and furthermore a design free from undesirable stresses. This results in a robot, in accordance with the invention, having high accuracy and desirable dynamic performance.

According to the invention, the robot comprises a manipulator with arms rotating around one or at least two parallel axes. This reduces the unused operating volume, defined above. This results in a compact robot, which due to the design has the premises of operating within a large operating volume. Furthermore, the robot according to the invention comprises a manipulator, which lacks positions with an arm extending undesirably in space during operation.

According to the invention, the robot comprises a universal column concept, which is suitable to arrange on a floor, on a wall, between two walls or from a ceiling irrespective of the orientation of the column. According to the invention, the stationary platform comprises a column arranged with a detachable robot stand in either end of the column.

According to the invention, the at least two platforms parts are jointed together in order to obtain different optional functions. In one alternative of the invention, the at least two platform parts are jointed through a hinge. In one embodiment, the at least first and second platform parts are arranged pivoting around an axis parallel to the common rotational axis. In another alternative of the invention, the at least two platform parts are jointed through a parallelogram.

According to the invention, the manipulator comprises totally at least seven links connecting the respective first arm part and the movable platform. In one embodiment, the manipulator comprises seven links and is of the combination 3/3/1. According to the invention, four arms are connecting the platforms. In one embodiment, the manipulator comprises seven links and is of the combination 3/2/1/1. The triple links and the double links are arranged in parallel alternatively in a triangular constellation.

Links arranged in a triangular constellation is defined in the following starting from two or three links arranged in parallel, where each link comprises a joint in each end. To obtain a triangular constellation, the respective joints in either end of the links are combined to one single joint. Two links in a triangular constellation comprises three joints, one of which is connected to two links. Three links in a triangular constellation comprises four joints, one of which is connected to three links.

According to the invention, at least one secondary platform is movably arranged on the movable platform. According to an alternative of the invention, transmission means is arranged to transmit the relative movement of the platform parts into movement of at lest one secondary platform. In one embodiment, the secondary platform is arranged to rotate through a gear wheel arrangement. The secondary platform is arranged for endless rotation. In another embodiment, the transmission means comprises a rack and pinion arrangement. The secondary platform is arranged for linear movement and alternatively both linear and rotational movement.

According to the invention, the platform parts are arranged to comprise a gripping head including a first gripping finger arranged on the first platform and a second gripping finger arranged on the second platform part.

The solution according to the second aspect of the invention is to provide a method as defined in claim 21. The actuating means are individually actuating the arms to relative movement in 1DOF and a first and a second jointed platform part are brought to relative movement during actuation of the arms.

According to the invention, a manipulator comprises at least three arms, which arms are brought to rotate in parallel planes around a common axis. In one embodiment of the invention, a fourth arm is brought to connect the platforms for rotation around the common axis.

According to another embodiment of the invention, the relative movement of the at least two platform parts is brought to transmit movement to a secondary platform arranged on the movable platform.

The solution according to the third aspect of the invention is to use a robot according to the first aspect and a method according to the second aspect for high accuracy operations, in for example applications measurements, laser cutting, assembly, disassembly, fettling of castings or machining.

### BRIEF DESCRIPTION OF THE DRAWING

The invention will be explained more closely by the description of different embodiments thereof and with reference to the appended drawing in which:
Figure 1 is an industrial robot PKM according to the invention of the combination 3/3/1 comprising a joint-platform,
Figure 2 is an industrial robot PKM according to the invention of the combination 3/2/1/1 comprising a joint-platform,
Figure 3 is an alternative embodiment of the PKM of Figure 2,
Figure 4 is Figure 2 with an alternative secondary platform according to the invention,
Figure 5 is another alternative secondary platform according to the invention comprising a gripping head,
Figure 6 is an alternative to Figure 5 comprising two individually controlled secondary platforms,
Figure 7 is an alternative to Figure 1 with the links in a triangular constellation,
Figure 8 is an alternative to Figure 2 comprising triangular link configurations, Figure 9 is figure 1 from the prior art document WO 97/33726.

### DESCRIPTION OF THE PREFERRED EMBODIMENTS

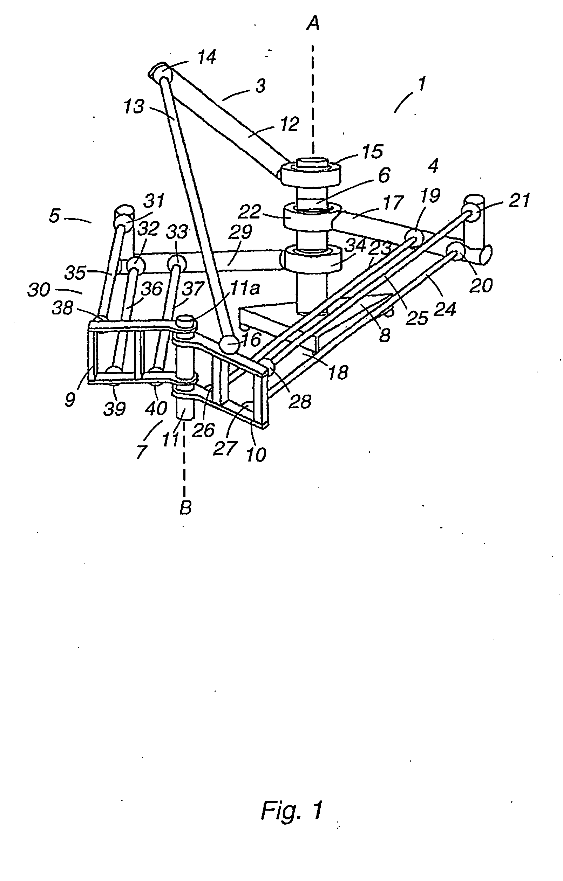

Figure 1 is an industrial robot comprising a manipulator 1 with three arms 3, 4, 5 arranged rotating around a common axis A. The arms 3, 4, 5 are connecting a stationary column 6 and a movable platform 7 in the combination 3/3/1. The column 6 is supported by a detachable stand 8, which is fixed to the ground.

The movable platform 7 is divided in a first 9 and a second platform part 10, which parts 9 and 10 are connected in pivot in a joint 11 comprising one degree of freedom.

The first arm 3 comprises a supporting first arm part 12 and a second arm part comprising a link arrangement 13 pivotally connected in series via a joint 14. The supporting first arm part 12 is rotationally attached to the column 6 through connecting means 15. The link arrangement 13 is pivotally connected to the movable second platform part 10 via a joint 16.

The second arm 4 comprises a supporting first arm part 17 and a second arm part comprising a link arrangement 18 pivotally connected in series via joints 19, 20 and 21. The supporting first arm part 17 is rotationally attached to the column 6 through connecting means 22. The link arrangement 18 comprises three links 23, 24 and 25 of the same length, arranged in parallel and pivotally connected to the movable platform 7 via joints 26, 27 and 28.

The third arm 5 comprises a supporting first arm part 29 and a second arm part comprising a link arrangement 30 pivotally connected in serial via joints 31, 32 and 33. The supporting first arm part 29 is rotary attached to the column 6 through connecting means 34. The link arrangement 30 comprises three links 35, 36 and 37 of the same length, arranged in parallel and pivotally connected to the movable platform 7 via joints 38, 39 and 40, respectively. The supporting first arm parts 12, 17 and 29 are rotating about a common axis A and therefore their movements will be in parallel planes.

Figure 1 shows the movable platform of a PKM divided into two platform parts connected in a joint 11 comprising one degree of freedom. In this embodiment, the platform comprises seven degrees of freedom totally and therefore it includes seven links and seven joints connected to the platform. The arms 3-5 are brought to rotate around the common column 6 through the controlling connecting means 15, 22 and 34.

Figure 1 is an industrial robot of the combination 3/3/1 comprising three arms 3, 4 and 5, which are designed for manipulating an object in the x-, y- and z-direction by means of force applying arrangements (not shown). The robot is designed to allow the supporting first arm parts 12, 17 and 29 rotation about one single axis A, which they have in common. The second arm parts closest to the movable platform are the link arrangements 13, 18 and 30, respectively, and they share the necessary seven links in the combination 3/3/1. The joints 14, 19, 20, 21, 31, 32 and 33 are designed to allow a relative movement of three degrees of freedom between respective supporting arm parts and link arrangements. Two of the said three degrees of freedom consist of pivoting in all directions about two real or imaginary axes placed at an angle to each other and the third is in the form of rotation of an individual link about its longitudinal axis. In reality, the individual joints 14, 19, 20, 21, 31, 32 and 33 comprise ball joints or universal joints.

With the links 36 and 37, of the same length and arranged in parallel, together with the links 23 and 24 of the same length and arranged in parallel, the platform part 9 will always be in parallel with the arm 6 and the platform part 10 will always be in parallel with the arm 7. Further, the link 35 is of the same length and parallel to the links 36 and 37. Thus, the axis B of the joint 11 always is parallel to the common axis A of the connecting means 3-5.

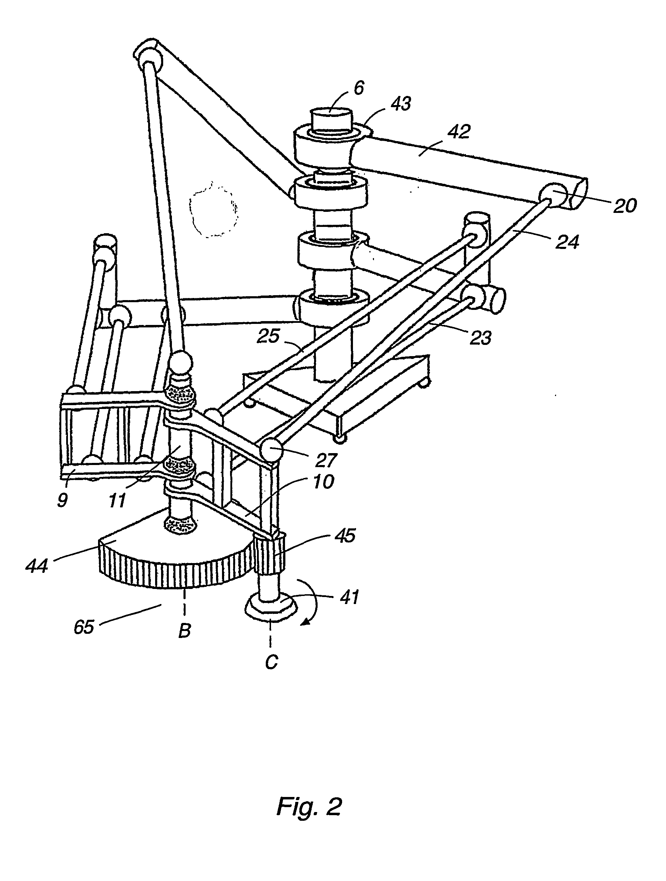

Figure 2 is an alternative embodiment of the invention and shows a PKM arranged with a secondary platform 41 and an extra fourth arm 42, which due to the connecting means 43 is able to rotate around the column 6. The position of the fourth arm 42 governs the relative angle between the platform parts 9 and 10. A first gear wheel 44 is fastened coaxial to the joint 11 and a second gear wheel 45 is fastened to the platform part 10 and is arranged with its axis C in parallel with axis B. Rotation of the fourth arm 42 around the column 6 causes a change of the relative angle between the platform parts 10 and 11. The change of the relative angle between the platform parts causes in turn a rotation of the secondary platform 41. The rotation of the secondary platform 41 is created due to the first 44 and the second gear wheel 45 arranged in intermeshing connection.

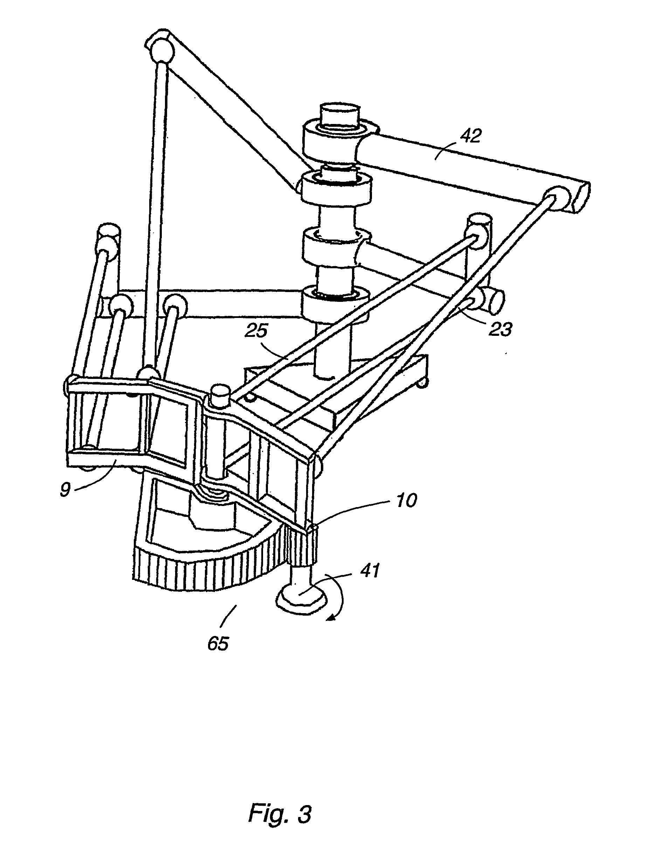

Figure 3 shows another alternative embodiment of the invention, where the links 23 and 25 are connected to the platform part 9 instead of connected to the platform part 10 as in Figure 2.

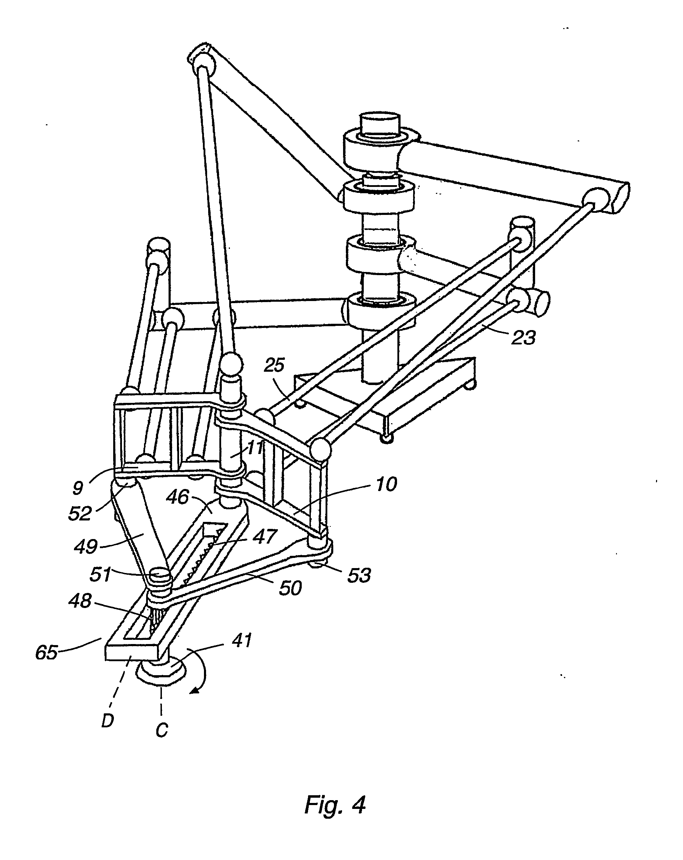

Figure 4 is a further alternative embodiment of the invention. Due to the divided joint-platform, a secondary platform 41, which always has a radial orientation relative the column 6 is implemented. The relative movement between the platform parts 9 and 10 is also used to tilting and rotational movements of the secondary platform 41. A first arm 46 is pivotally connected to the joint 11 for rotation around the axis B. The arm comprises a rack 47 and a pinion 48 arranged in a rack and pinion relation. The pinion 48 is connected to secondary platform 41 for rotation around the rotational axis C. The pinion 48 is pivotally connected to a second 49 and a third arm 50 via a joint/ first axle 51. The second arm 49 is in its turn pivotally connected to a second axle 52, arranged on the first platform part 9. The third arm 50 is pivotally connected to a third axle 53, arranged on the second platform part 10. When the first platform part 9 is pivoted relatively the second platform part 10, the secondary platform 41 will be sliding back and forth during simultaneous rotation.

In one embodiment according to Figure 4, the second 49 and third arm 50 are of the same length and further the second axle 52 is arranged at the same distance to the axle 11 as the third axle 53. In this embodiment, the first arm 46 will always be positioned in the middle between the first 9 and the second platform part 10.

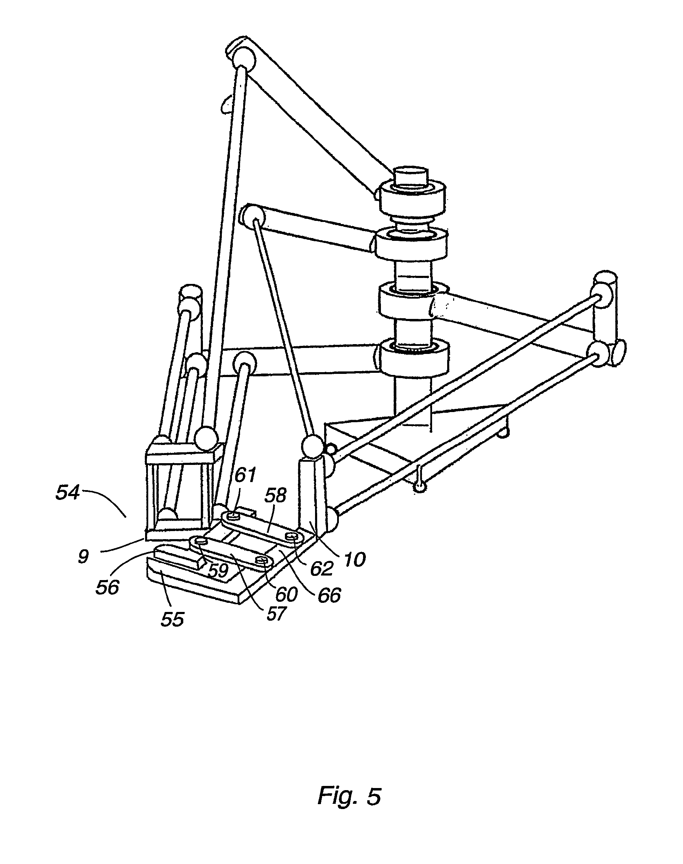

Figure 5 is an embodiment, according to the invention, in which the first 9 and the second platform part 10 are pivotally connected through a parallelogram such that a gripping head 54 is created. The gripping head 54 comprises the first 55 and second gripping finger56. The parallelogram consists of links 57 and 58 and joints 59,60 respective 61,62.

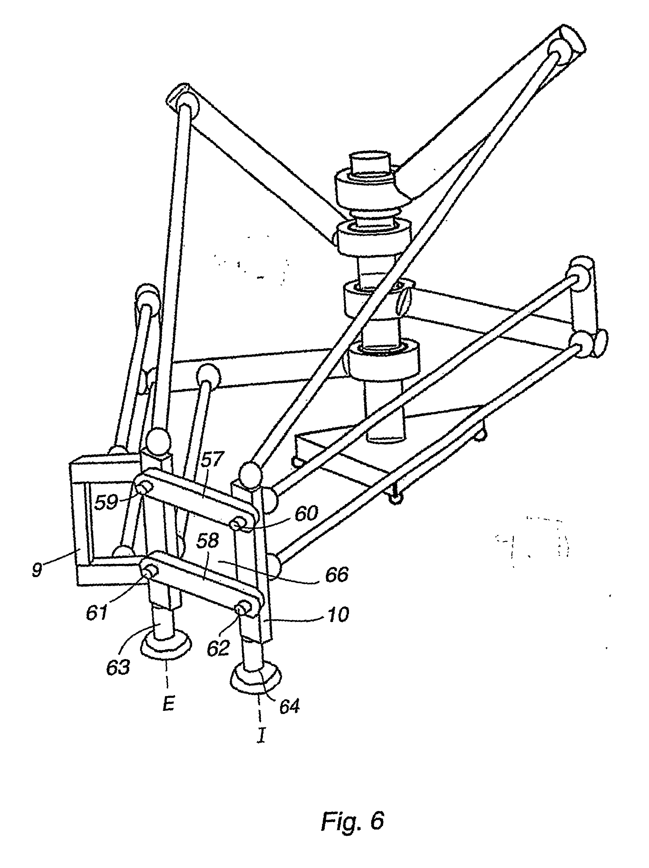

Figure 6 is the gripping head 54 in figure 6 vertically mounted and used for individual control of two secondary platforms 63 and 64.

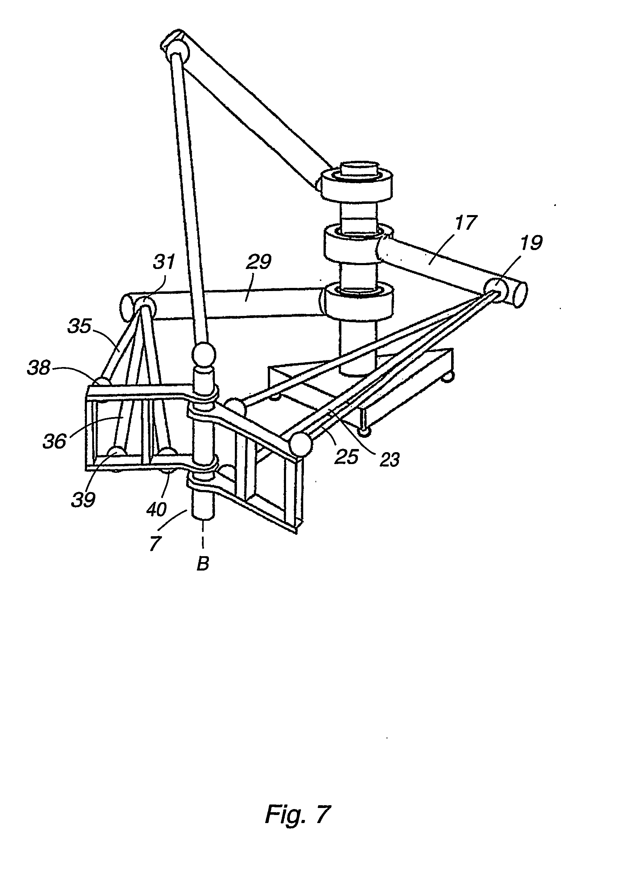

Figure 7 is an alternative embodiment according to Figure 1. The links 23, 24 and 25 are arranged in a triangular constellation to give a pivot point at the joint 19 on the tip of the supporting arm part 17. In the same way, the links 35, 36 and 37 are arranged to meet in pivot point 31 on the supporting arm part 29. With this arrangement the platform 7 will be tilted upwards when working upwards and downwards when working downwards, which is useful when working against a concave object.

There are alternative embodiments of the Figures 2-6, which comprises triangular link arrangements with pivot points, the only difference is that one of the links to the two lower arms in Figure 7 is manipulated separately by a fourth arm.

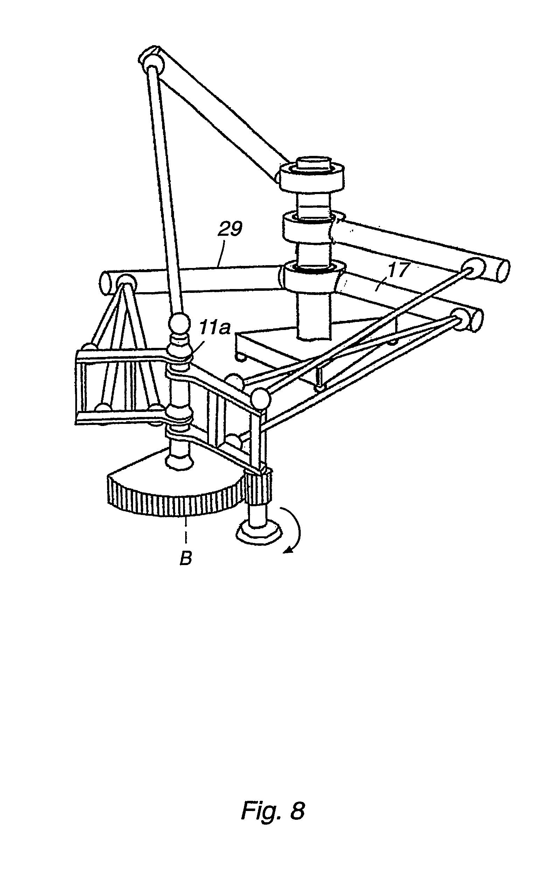

Figure 8 is an alternative to Figure 2 comprising triangular link configurations used together with a manipulated two parts platform according to Figure 2. The supporting arm parts 17 and 29 are arranged with the same drive unit, which gives a 3DOF manipulator for the orientation of a tool or a work object. For example, it is possible to use this embodiment in a robot wrist. Different wrist kinematics are obtainable by using different directions of B-axis.

While only certain preferred features of the present invention have been illustrated and described, many modifications and changes will be apparent to those skilled in the art. A modification is to arrange the stationary platform on a movable foundation included in a larger arrangement. It is therefore to be understood that all such modifications and changes of the present invention fall within the scope of the claims.

## Claims

1. An industrial robot including a manipulator comprising a stationary platform (6), a movable platform (7) and at least three arms (3, 4, 5, 42) connecting the platforms (6, 7), wherein each of the at least three arms is arranged connected to the stationary platform for movement in 1DOF, wherein each of the at least three arms (3, 4, 5, 42) is arranged to rotate around a respective axis of rotation, wherein each of the at least three arms (3, 4, 5, 42) comprises a supporting first ann part (12, 17, 29) connected to the stationary platform (6) and a second arm part comprising a link arrangement (13, 18, 30) connected to the movable platform (7), and at least one of the at least three arms comprises a link arrangement formed of one link (13) connected to the movable platform (7), and wherein at least one of the at least three arms comprises a link arrangement formed of three links (23, 24, 25; 35, 36, 37) connected to the movable platform (7), **characterized in that** the at least three arms of the manipulator comprise a total of at least seven links connected to the movable platform (7), that the movable platform (7) comprises at least a first platform part (9) and a second platform part (10), and that the first platform part (9) is arranged movable relative the second platform part (10).

2. An industrial robot according to claim 1, wherein the first (9) and the second platform part (10) are jointed.

3. An industrial robot according to any one of claims 1 or 2, wherein the manipulator (1) comprises a parallel kinematic manipulator PKM.

4. An industrial robot according to any one of the preceding claims, wherein the at least three arms (3, 4, 5, 42) are arranged to rotate around a common axis of rotation (A).

5. An industrial robot according to claim 4, wherein the arms (3, 4, 5) are arranged for endless rotation.

6. An industrial robot according to claim 4, wherein the first (9) and second platform parts (10) are arranged pivoting around an axis of pivoting (B), which is parallel to a common axis of rotation (A) of the at least three arms (3, 4, 5, 42).

7. An industrial robot according to claim 6, wherein the at least first (9) and second platform parts (10) are jointed through a hinge (11a).

8. An industrial robot according to any one of the preceding claims, wherein the link arrangement of the second part of a first arm (3) comprises one link (13), the link arrangement of the second part of a second arm (4) comprises three links (23, 24, 25) and the link arrangement of the second part of a third arm (5) comprises three links (35, 36, 37).

9. An industrial robot according to claim 8, wherein the three links (23, 24, 25; 35, 36, 37) of the respective second (4) and third arms (5) are connected to the movable platform (7) in three joints (26, 27, 28; 38, 39, 40) arranged in a triangular constellation on the platform (7).

10. An industrial robot according to claim 6, wherein it comprises a fourth arm (42) comprising a supporting first arm part connected to the stationary platform (6) and a second arm part comprising a link arrangement connected to the movable platform (7).

11. An industrial robot according to claim 10, wherein the at least first (9) and second platform part (10) are jointed through a parallelogram (66) with two links (57, 58) each connected to the first platform part (9) in a first joint (59, 61) and connected to the second platform part (10) in a second joint (60, 62).

12. An industrial robot according to claim 11, wherein the two links (57, 58) are arranged to pivot in a plane parallel to or in an intersectional line to the axis of pivoting (B).

13. An industrial robot according to claim 11, wherein the two links (57, 58) are arranged to pivot in a plane including an intersectional point on the axis of pivoting (B).

14. An industrial robot according to any preceeding claim, wherein at least one secondary platform (41) is movably arranged on the movable platform (7).

15. An industrial robot according to claim 14, wherein a transmission means (65) is arranged to transmit relative movement of the platform parts (9, 10) into movement of the secondary platform (41, 63, 64).

16. An industrial robot according to claim 15, wherein the transmission means (65) comprises a gear wheel arrangement (44, 45).

17. An industrial robot according to claim 15, wherein the transmission means (65) comprises a rack and pinion arrangement (47, 48).

18. An industrial robot according to claim 11, wherein the platform parts (9, 10) are arranged to comprise a gripping head (54) including a first gripping finger (55) arranged on the first platform part (9) and a second gripping finger (56) arranged on the second platform part (10).

19. An industrial robot according to any of claims 10-18, wherein the manipulator (1) comprises a first arm with one link, a second arm with two links, a third arm with three links and a fourth arm with one link.

20. An industrial robot according to any preceeding claims, wherein one manipulator is comprised in a wrist of the robot.

21. A method for manipulation in an industrial robot including a manipulator comprising a stationary platform (6), a movable platform (7) and at least three arms (3, 4, 5, 42) connecting the platforms (6, 7), and actuating means for actuating the arms, which actuating means are individually actuating the arms to relative movement in 1DOF, each of the at least three arms (3, 4, 5, 42) being arranged to rotate around a respective axis of rotation, and wherein each of the at least three arms (3, 4, 5, 42) is brought to comprise a supporting first arm part (12, 17, 29) connected to the stationary platform (6) and a second arm part comprising a link arrangement (13, 18, 30) connected to the movable platform (7), wherein at least one of the at least three arms is brought to comprise a link arrangement formed of one link (13) connected to the movable platform (7), and wherein at least one of the at least three arms is brought to comprise a link arrangement formed of three links (23, 24, 25; 35, 36, 37) connected to the movable platform (7), **characterized in that** the at least three arms of the manipulator are brought to comprise a total of at least seven links, connected to the movable platform (7) that the movable platform (7) is brought to comprise at least a first platform part (9) and a second platform part (10), and that the at least first (9) and second platform parts (10) are brought to relative movement during actuation of the arms for bringing the movable platfonn (7) operable.

22. A method according to claim 21, wherein the at least first (3), second (4) and third arms (5) are brought to rotate around a common axis (A).

23. A method according to claim 22, wherein the at least first (9) and the second platform part (10) are brought jointed.

24. A method according to any of claims 21-23, wherein the relative movement of the platform parts (9, 10) is brought to transmit movement to at least one secondary platform (41, 63, 64) arranged on the movable platform (7).

25. A method according to claim 24, wherein the secondary platform (41) is brought to rotate.

26. A method according to claim 24, wherein the secondary platform (41) is brought to move in a linear direction.

27. A method according to claim 26, wherein the secondary platform (41) is brought to move in a direction along an axis (B) parallel to the common axis of rotation (A).

28. A method according to claim 23, wherein the secondary platform (41) is arranged to move in a linear direction during simultaneous rotation.

29. Use of an industrial robot according to any one of claims 1-20 and a method according to any one of claims 21-28 in a robot wrist for high-accuracy operations.

30. Use of an industrial robot according to any one of claims 1-20 a method according to any one of claims 21-28 for high-accuracy operations in clean rooms.

## Patentansprüche

1. Ein industrieller Roboter beinhaltend einen Manipulator, umfassend eine stationäre Plattform (6), eine bewegliche Plattform (7) und zumindest drei Arme (3, 4, 5, 42), die die Plattformen (6, 7) verbinden, wobei jeder der zumindest drei Arme mit der stationären Plattform zur Bewegung in einem Freiheitsgrad verbunden angeordnet ist, wobei jeder der zumindest drei Arme (3, 4, 5, 42) angeordnet ist, um um eine jeweilige Rotationsachse zu rotieren, wobei jeder der zumindest drei Arme (3, 4, 5, 42) einen unterstützenden ersten Armteil (12, 17, 29), der mit der stationären Plattform (6) verbunden ist, und einen zweiten Armteil umfasst, der eine Verbindungsanordnung (13, 18, 30) umfasst, die mit der beweglichen Plattform (7) verbunden ist, und wobei zumindest einer der zumindest drei Arme eine Verbindungsanordnung umfasst, die durch eine Verbindung (13) gebildet wird, die mit der beweglichen Plattform (7) verbunden ist, und wobei zumindest einer der zumindest drei Arme eine Verbindungsanordnung umfasst, die aus drei Verbindungen (23, 24, 25; 35, 36, 37) gebildet wird, die mit der beweglichen Plattform (7) verbunden sind, **dadurch gekennzeichnet, dass** die zumindest drei Arme des Manipulators eine Gesamtheit von zumindest sieben Verbindungen umfassen, die mit der beweglichen Plattform (7) verbunden sind, dass die bewegliche Plattform (7) zumindest einen ersten Plattformteil (9) und einen zweiten Plattformteil (10) umfasst, und dass der erste Plattformteil (9) relativ zu dem zweiten Plattformteil (10) beweglich angeordnet ist.

2. Ein industrieller Roboter nach Anspruch 1, wobei der erste (9) und der zweite Plattformteil (10) verbunden sind.

3. Ein industrieller Roboter nach einem der Ansprüche 1 oder 2, wobei der Manipulator (1) einen Parallel-Kinematik-Manipulator (PKM) umfasst.

4. Ein industrieller Roboter nach einem der vorangehenden Ansprüche, wobei die zumindest drei Arme (3, 4, 5, 42) angeordnet sind, um um eine gemeinsame Rotationsachse (A) zu rotieren.

5. Ein industrieller Roboter nach Anspruch 4, wobei die Arme (3, 4, 5) für eine endlose Rotation eingerichtet sind.

6. Ein industrieller Roboter nach Anspruch 4, wobei der erste (9) und der zweite Plattformteil (10) schwenkend um eine Schwenkachse (B) angeordnet sind, die sich parallel zu einer gemeinsamen Rotationsachse (A) der zumindest drei Arme (3, 4, 5, 42) befindet.

7. Ein industrieller Roboter nach Anspruch 6, wobei zumindest der erste (9) und der zweite Plattformteil (10) durch ein Gelenk (11a) verbunden sind.

8. Ein industrieller Roboter nach einem der vorangehenden Ansprüche, wobei die Verbindungsanordnung des zweiten Teils eines ersten Arms (3) eine Verbindung (13) umfasst, die Verbindungsanordnung des zweiten Teils eines zweiten Arms (4) drei Verbindungen (23, 24, 25) umfasst, und die Verbindungsanordnung des zweiten Teils eines dritten Arms (5) drei Verbindungen (35, 36, 37) umfasst.

9. Ein industrieller Roboter nach Anspruch 8, wobei die drei Verbindungen (23, 24, 25; 35, 36, 37) des jeweiligen zweiten (4) und dritten Arms (5) mit der beweglichen Plattform (7) in drei Anschlüssen (26, 27, 28; 38, 39, 40) verbunden sind, die in einer dreieckigen Konstellation auf der Plattform (7) angeordnet sind.

10. Ein industrieller Roboter nach Anspruch 6, wobei er einen vierten Arm (42) umfasst, der einen unterstützenden ersten Armteil, der mit der stationären Plattform (6) verbunden ist, und einen zweiten Armteil umfasst, der eine Verbindungsanordnung umfasst, die mit der beweglichen Plattform (7) verbunden ist.

11. Ein industrieller Roboter nach Anspruch 10, wobei zumindest der erste (9) und zweite Plattformteil (10) durch ein Parallelogramm (66) mit zwei Verbindungen (57, 58) verbunden ist, wobei jede mit dem ersten Plattformteil (9) in einem ersten Anschluss (59, 61) verbunden ist und mit dem zweiten Plattformteil (10) in einem zweiten Anschluss (60, 62) verbunden ist.

12. Ein industrieller Roboter nach Anspruch 11, wobei die zwei Verbindungen (57, 58) angeordnet sind, in einer Ebene parallel zu oder in einer Schnittlinie zu der Schwenkachse (B) zu schwenken.

13. Ein industrieller Roboter nach Anspruch 11, wobei die zwei Verbindungen (57, 58) angeordnet sind, in einer Ebene zu schwenken, die einen Schnittpunkt auf der Schwenkachse (B) beinhaltet.

14. Ein industrieller Roboter nach einem der vorangehenden Ansprüche, wobei zumindest eine Sekundärplattform (41) beweglich auf der beweglichen Plattform (7) angeordnet ist.

15. Ein industrieller Roboter nach Anspruch 14, wobei ein Übertragungsmittel (65) angeordnet ist, um eine relative Bewegung der Plattformteile (9, 10) in eine Bewegung der Sekundärplattform (41, 63, 64) zu übertragen.

16. Ein industrieller Roboter nach Anspruch 15, wobei das Übertragungsmittel (65) eine Zahnradanordnung (44, 45) umfasst.

17. Ein industrieller Roboter nach Anspruch 15, wobei das Übertragungsmittel (65) eine Zahnstangenanordnung (47, 48) umfasst.

18. Ein industrieller Roboter nach Anspruch 11, wobei die Plattformteile (9, 10) eingerichtet sind, um einen Spannkopf (54) zu umfassen, der einen ersten Spannfinger (55), der auf dem ersten Plattformteil (9) angeordnet ist, und einen zweiten Spannfinger (56) beinhaltet, der auf dem zweiten Plattformteil (10) angeordnet ist.

19. Ein industrieller Roboter nach einem der Ansprüche 10-18, wobei der Manipulator (1) einen ersten Arm mit einer Verbindung, einen zweiten Arm mit zwei Verbindungen, einen dritten Arm mit drei Verbindungen und einen vierten Arm mit einer Verbindung umfasst.

20. Ein industrieller Roboter nach einem der vorangehenden Ansprüche, wobei ein Manipulator in einem Gelenk des Roboters umfasst ist.

21. Ein Verfahren zum Manipulieren in einem industriellen Roboter, beinhaltend einen Manipulator, umfassend eine stationäre Plattform (6), eine bewegliche Plattform (7) und zumindest drei Arme (3, 4, 5, 42), die die Plattformen (6, 7) verbinden, und Antriebsmittel zum Antreiben der Arme, wobei die Antriebsmittel die Arme einzeln zu einer relativen Bewegung mit einem Freiheitsgrad antreiben, wobei jeder der zumindest drei Arme (3, 4, 5, 42) angeordnet wird, um um eine jeweilige Rotationsachse zu rotieren, und wobei jeder der zumindest drei Arme (3, 4, 5, 42) arrangiert wird, einen unterstützenden ersten Armteil (12, 17, 29), der mit der stationären Plattform (6) verbunden ist, und einen zweiten Armteil zu umfassen, der eine Verbindungsanordnung (13, 18, 30) umfasst, die mit der beweglichen Plattform (7) verbunden ist, wobei zumindest einer der zumindest drei Arme arrangiert wird, eine Verbindungsanordnung zu umfassen, die durch eine Verbindung (13) gebildet wird, die mit der beweglichen Plattform (7) verbunden ist, und wobei zumindest einer der zumindest drei Arme arrangiert wird, eine Verbindungsanordnung zu umfassen, die aus drei Verbindungen (23, 24, 25; 35, 36, 37) gebildet wird, die mit der beweglichen Plattform (7) verbunden sind, **dadurch gekennzeichnet, dass** die zumindest drei Arme des Manipulators arrangiert werden, eine Gesamtheit von zumindest sieben Verbindungen zu umfassen, die mit der beweglichen Plattform (7) verbunden sind, dass die bewegliche Plattform (7) arrangiert wird, zumindest einen ersten Plattformteil (9) und einen zweiten Plattformteil (10) zu umfassen, und dass der zumindest erste (9) und zweite Plattformteil (10) zu einer Relativbewegung während des Antriebs der Arme veranlasst werden, um die bewegliche Plattform (7) betriebsbereit zu machen.

22. Ein Verfahren nach Anspruch 21, wobei zumindest der erste (3), zweite (4) und dritte Arm (5) veranlasst werden, um um eine gemeinsame Achse (A) zu rotieren.

23. Ein Verfahren nach Anspruch 22, wobei zumindest der erste (9) und zweite Plattformteil (10) verbunden arrangiert werden.

24. Ein Verfahren nach einem der Ansprüche 21- 23, wobei die relative Bewegung der Plattformteile (9, 10) arrangiert wird, eine Bewegung zu zumindest einer Sekundärplattform (41, 63, 64) zu übertragen, die auf der beweglichen Plattform (7) angeordnet ist.

25. Ein Verfahren nach Anspruch 24, wobei die Sekundärplattform (41) zum Rotieren veranlasst wird.

26. Ein Verfahren nach Anspruch 24, wobei die Sekundärplattform (41) veranlasst wird, sich in einer linearen Richtung zu bewegen.

27. Ein Verfahren nach Anspruch 26, wobei die Sekundärplattform (41) veranlasst wird, sich in einer Richtung entlang einer Achse (B) parallel zu der gemeinsamen Rotationsachse (A) zu bewegen.

28. Ein Verfahren nach Anspruch 23, wobei die Sekundärplattform (41) angeordnet ist, um sich in einer linearen Richtung während gleichzeitiger Rotation zu bewegen.

29. Verwendung eines industriellen Roboters nach einem der Ansprüche 1-20 und eines Verfahren nach einem der Ansprüche 21-28 in einem Robotergelenk für Betriebe mit hoher Genauigkeit.

30. Verwendung eines industriellen Roboters nach einem der Ansprüche 1-20 und eines Verfahrens nach einem der Ansprüche 21-28 für Betriebe mit hoher Genauigkeit in Reinräumen.

## Revendications

1. Robot industriel comprenant un manipulateur comportant une plate-forme fixe (6), une plate-forme mobile (7) et au moins trois bras (3, 4, 5, 42) reliant les plates-formes (6, 7), dans lequel chacun des au moins trois bras est conçu pour se monter sur la plate-forme fixe pour bouger suivant 1 degré de liberté DDL, dans lequel chacun des au moins trois bras (3, 4, 5, 42) est conçu pour tourner autour d'un axe de rotation respectif, dans lequel chacun des au moins trois bras (3, 4, 5, 42) comporte une première partie (12, 17, 29) de bras à fonction de support, conçue pour se monter sur la plate-forme fixe (6) et une seconde partie de bras comportant un système de tringlerie (13, 18, 30) monté sur la plate-forme mobile (7), et au moins un des au moins trois bras comporte un système de tringlerie constitué d'une tringle (13) montée sur la plate-forme mobile (7), et dans lequel au moins un des au moins trois bras comporte un système de tringlerie constitué de trois tringles (23, 24, 25 ; 35, 36, 37) montées sur la plate-forme mobile (7), **caractérisé en ce que** les au moins trois bras du manipulateur comptent un total d'au moins sept tringles montées sur la plate-forme mobile (7), et **en ce que** la plate-forme mobile (7) comporte au moins une première partie (9) de plate-forme et une deuxième partie (10) de plate-forme, et **en ce que** la première partie (9) de plate-forme est conçue pour pouvoir bouger par rapport à la deuxième partie (10) de plate-forme.

2. Robot industriel selon la revendication 1, dans lequel la première (9) et la deuxième (10) parties de plate-forme sont assemblées.

3. Robot industriel selon l'une quelconque des revendications 1 et 2, dans lequel le manipulateur (1) est constitué par un manipulateur cinématique parallèle MCP.

4. Robot industriel selon l'une quelconque des revendications précédentes, dans lequel les au moins trois bras (3, 4, 5, 42) sont conçus pour tourner autour d'un axe de rotation commun (A).

5. Robot industriel selon la revendication 4, dans lequel les bras (3, 4, 5) sont conçus pour tourner sans fin.

6. Robot industriel selon la revendication 4, dans lequel la première (9) et la deuxième (10) parties de plate-forme sont conçues pour pivoter autour un axe de pivotement (B) parallèle à un axe de rotation commun (A) des au moins trois bras (3, 4, 5, 42).

7. Robot industriel selon la revendication 6, dans lequel les au moins première (9) et deuxième (10) parties de plate-forme (10) sont assemblées par l'intermédiaire d'une articulation (11a).

8. Robot industriel selon l'une quelconque des revendications précédentes, dans lequel le système de tringlerie de la seconde partie d'un premier bras (3) comporte une tringle (13), le système de tringlerie de la seconde partie d'un deuxième bras (4) comporte trois tringles (23, 24, 25) et le système de tringlerie de la seconde partie d'un troisième bras (5) comporte trois tringles (35, 36, 37).

9. Robot industriel selon la revendication 8, dans lequel les trois tringles (23, 24, 25 ; 35, 36, 37) respectivement du deuxième (4) et du troisième (5) bras sont montées sur la plate-forme mobile (7) en trois points d'assemblage (26, 27, 28 ; 38, 39, 40) formant une constellation triangulaire sur la plate-forme (7).

10. Robot industriel selon la revendication 6, comprenant un quatrième bras (42) comportant une première partie de bras à fonction de support montée sur la plate-forme fixe (6) et une seconde partie de bras comportant un système de tringlerie montée sur la plate-forme mobile (7).

11. Robot industriel selon la revendication 10, dans lequel les au moins première (9) et deuxième (10) parties de plate-forme sont assemblées par l'intermédiaire d'un parallélogramme (66) avec deux tringles (57, 58) montées chacune sur la première partie (9) de plate-forme en un premier point d'assemblage (59, 61) et montées sur la deuxième partie (10) de plate-forme en un second point d'assemblage (60, 62).

12. Robot industriel selon la revendication 11, dans lequel les deux tringles (57, 58) sont conçues pour pivoter dans un plan parallèle ou sur une droite sécante par rapport à l'axe de pivotement (B).

13. Robot industriel selon la revendication 11, dans lequel les deux tringles (57, 58) sont conçues pour pivoter dans un plan contenant un point d'intersection sur l'axe de pivotement (B).

14. Robot industriel selon l'une quelconque des revendications précédentes, dans lequel au moins une plate-forme secondaire (41) est conçue pour bouger sur la plate-forme mobile (7).

15. Robot industriel selon la revendication 14, dans lequel un moyen de transmission (65) est conçu pour transmettre un mouvement relatif des parties (9, 10) de plate-forme afin de mettre en mouvement la plate-forme secondaire (41, 63, 64).

16. Robot industriel selon la revendication 15, dans lequel le moyen de transmission (65) comporte un système d'engrenage (44, 45).

17. Robot industriel selon la revendication 15, dans lequel le moyen de transmission, (65) comporte un système à crémaillère et pignon (47, 48).

18. Robot industriel selon la revendication11, dans lequel les parties (9, 10) de plate-forme sont conçues pour comporter une tête de préhension munie d'un premier doigt préhenseur (55) monté sur la première partie (9) de plate-forme et d'un second doigt préhenseur (56) monté sur la deuxième partie (10) de plate-forme.

19. Robot industriel selon l'une quelconque des revendications 10 à 18, dans lequel le manipulateur (1) comporte un premier bras avec une tringle, un deuxième bras avec deux tringles, un troisième bras avec trois tringles et un quatrième bras avec une tringle.

20. Robot industriel selon l'une quelconque des revendications précédentes; dans lequel un manipulateur fait partie d'un poignet du robot.

21. Procédé de manipulation dans un robot industriel comprenant un manipulateur comportant une plate-forme fixe (6), une plate-forme mobile (7) et au moins trois bras (3, 4, 5, 42) reliant les plates-formes, et des moyens d'actionnement pour actionner les bras, lesquels moyens d'actionnement actionnent individuellement les bras pour provoquer leur mouvement relatif dans 1 DDL, chacun des au moins trois bras (3, 4, 5, 42) étant conçu pour tourner autour d'un axe de rotation respectif, et dans lequel chacun des au moins trois bras (3, 4, 5, 42) est amené à comporter une première partie (12, 17, 29) de bras à fonction de support montée sur la plate-forme fixe (6) et une seconde partie de bras comportant un système de tringlerie (13, 18, 30) montée sur la plate-forme mobile (7), dans lequel au moins un des trois bras est amené à comporter un système de tringlerie constitué d'une tringle montée sur la plate-forme mobile (7), et dans lequel au moins un des au moins trois bras est amené à comporter un système de tringlerie constitué de trois tringles (23, 24, 25 ; 35, 36, 37) montées sur la plate-forme mobile (7), **caractérisé en ce que** les au moins trois bras de manipulateur sont amenés à compter un total d'au moins sept tringles montées sur la plate-forme mobile (7), **en ce que** la plate-forme mobile (7) est amenée à comporter au moins une première partie (9) de plate-forme et une deuxième partie (10) de plate-forme, et **en ce que** les au moins première (9) et deuxième (10) parties de plate-forme sont mises en mouvement relatif pendant l'actionnement des bras pour pouvoir faire fonctionner la plate-forme mobile (7).

22. Procédé selon la revendication 21, dans lequel les au moins premier (3), deuxième (4) et troisième (5) bras sont amenés à tourner autour d'un axe de rotation commun (A).

23. Procédé selon la revendication 22, dans lequel les au moins première (9) et deuxième (10) parties de plate-forme sont amenées à s'assembler.

24. Procédé selon l'une quelconque des revendications 21 à 23, dans lequel le mouvement relatif des parties (9, 10) de plate-forme est amené à transmettre un mouvement à au moins une plate-forme secondaire (41, 63, 64) disposée sur la plate-forme mobile (7).

25. Procédé selon la revendication 24, dans lequel la plate-forme secondaire (41) est amenée à tourner.

26. Procédé selon la revendication 24, dans lequel la plate-forme secondaire (41) est amenée à bouger dans une direction linéaire.

27. Procédé selon la revendication 26, dans lequel la plate-forme secondaire (41) est amenée à bouger dans une direction suivant un axe (B) parallèle à l'axe de rotation commun (A).

28. Procédé selon la revendication 23, dans lequel la plate-forme secondaire (41) est conçue pour bouger dans une direction linéaire tout en tournant.

29. Utilisation d'un robot industriel selon l'une quelconque des revendications 1 à 20 et d'un procédé selon l'une quelconque des revendications 21 à 28 dans un poignet de robot pour des manoeuvres très précises.

30. Utilisation d'un robot industriel selon l'une quelconque des revendications 1 à 20 et d'un procédé selon l'une quelconque des revendications 21 à 28 pour des manoeuvres très précises dans des salles blanches.
